(19) Europäisches Patentamt
European Patent Office
Office européen des brevets

(11) Publication number: 0 275 555 B1

(12) **EUROPEAN PATENT SPECIFICATION**

(45) Date of publication of patent specification: **13.05.92**

(51) Int. Cl.5: **A01N 47/36**, //(A01N47/36, 37:32)

(21) Application number: **87119313.2**

(22) Date of filing: **29.12.87**

The file contains technical information submitted after the application was filed and not included in this specification

# (54) Herbicidal composition.

(30) Priority: **22.01.87 JP 12848/87**

(43) Date of publication of application:
**27.07.88 Bulletin 88/30**

(45) Publication of the grant of the patent:
**13.05.92 Bulletin 92/20**

(84) Designated Contracting States:
**CH DE ES FR GB GR IT LI NL SE**

(56) References cited:
**EP-A- 0 061 741**
**EP-A- 0 187 221**
**EP-A- 0 198 298**

**CENTRAL PATENTS INDEX, BASIC ABSTRACSTS JOURNAL, section c, AGDOC, week 28, 5th September 1984, Derwent Publications Ltd, London, GB; & JP-A-84 095 204 (SUMITOMO CHEMICAL K.K.) 24-11-1982**

(73) Proprietor: **SUMITOMO CHEMICAL COMPANY, LIMITED**
**Kitahama 4-chome 5-33**
**Chuo-ku Osaka 541(JP)**

(72) Inventor: **Hamada, Tatsuhiro**
**3-4-8-306, Mukomoto-machi**
**Amagasaki-shi Hyogo-ken(JP)**
Inventor: **Yoshida, Ryo**
**5-19, Azajizoyama Higashiuneno**
**Kawanishi-shi Hyogo-ken(JP)**

(74) Representative: **Vossius & Partner**
**Siebertstrasse 4 P.O. Box 86 07 67**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.08/2.19/2.0)

## Description

The present invention relates to a herbicidal composition. More particularly, it relates to a novel herbicidal composition exerting a highly enhanced herbicidal activity against a wide variety of weeds without causing any material phytotoxicity to crop plants (e.g. wheat, barley).

The herbicidal composition of the invention comprises as the active ingredients (a) at least one of tetrahydrophthalimides (hereinafter referred to as "Compound(s) (I)") of the general formula:

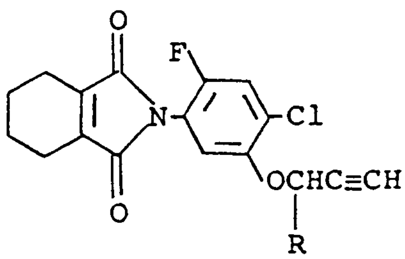

(I)

wherein R is a hydrogen atom or a methyl group and (b) at least one of 1-(2-chlorophenylsulfonyl)-3-(4-methoxy-6-methyl-1,3,5-triazin-2-yl)urea of the formula:

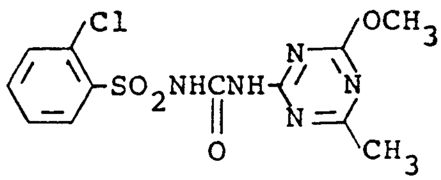

(hereinafter referred to as "chlorsulfuron") and methyl 2-[[[[(4-methoxy-6-methyl-1,3,5-triazin-2-yl)amino]-carbonyl]amino]sulfonyl]benzoate of the formula:

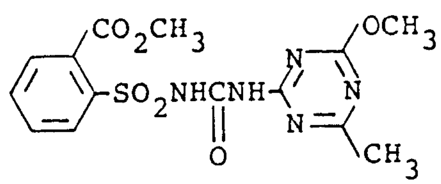

(hereinafter referred to as "metsulfuron-methyl").

In recent years, there have been used a great number of chemicals having herbicidal activities in order to exterminate or control undesired vegetation of weeds in agricultural and non-agricultural fields. Since, however, weeds are diversified in kinds and grow over a long period of time, the herbicidal effects of conventional herbicidal agents are restricted in general. Under the circumstances, the appearance of any herbicidal agent exerting a strong herbicidal activity as well as a broad herbicidal spectrum over a wide variety of weeds has been highly demanded.

As a result of the extensive study, it has now been found that the associated use of(a) at least one of Compounds (I) with (b) at least one of chlorsulfuron and metsulfuron-methyl, these being hereinafter referred to as "Compound(s) (II)", produces a highly enhanced herbicidal activity against a wide variety of weeds in agricultural and non-agricultural fields. In comparison with the sole use of each of said active ingredients, enhancement of the herbicidal potency on such associated use is remarkable so that the active ingredients may be applied in a smaller dosages. Further, the weed-control spectrum is greatly enlarged. Thus, a clear and definite synergistic effect is observed in said associated use.

The herbicidal composition of the invention can exterminate or control a variety of weeds, i.e. monocotyledonous weeds such as silky bentgrass (Apera spica-venti) and green foxtail (Setaria viridis); dicotyledonous weeds such as catchweed bedstraw (Galium aparine), common chickweed (Stellaria media), persian speedwell (Veronica persica), ivyleaf speedwell (Veronica hederifolia), field pansy (Viola arvensis),

scentless chamomile (Matricaria perforata), pineappleweed (Matricaria matricarioides), wild mustard (Sinapis arvensis), purple deadnettle (Lamium purpureum), Canada thistle (Cirsium arvense), field pennycress (Thlaspi arvense), forget-me-not (Myosotis arvensis), ladysthumb (Polygonum persicaria), pale smartweed (Polygonum lapathifolium), wild buckwheat (Polygonum convolvulus), field bindweed (Convolvulus arvensis), common lambsquarters (Chenopodium album), redroot pigweed (Amaranthus retroflexus) and black nightshade (Solanum nigrum), etc. Particularly, it is notable that the herbicidal composition according to the invention can exterminate hard-to-control weeds such as catchweed bedstraw, common chickweed, persian speedwell, ivyleaf speedwell, field pansy, ladysthumb, wild buckwheat, wild mustard, pineappleweed and scentless chamomile all together.

Compounds (I), which cover specifically the following two compounds:

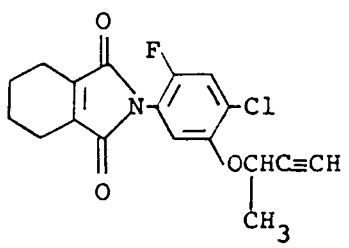

(Compound (1))

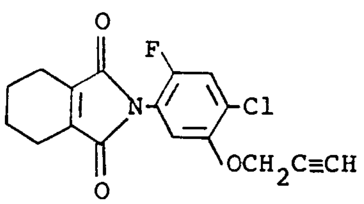

(Compound (2))

, are per se known to exert a herbicidal activity from EP-A-61741).

In EP-A-61 741 tetrahydrophthalimide derivatives of the general formula

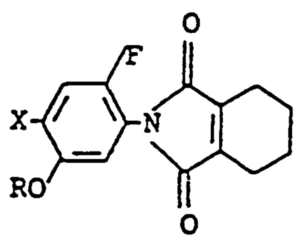

are described, wherein X is chlorine or bromine and R is a $C_1$-$c_8$ alkyl group, a $C_3$-$C_4$ alkenyl group or $C_3$-$C_4$ alkynyl group. The tetrahydrophthalimides may be used together with other herbicides to improve their activity as herbicides, and in some cases a synergistic effect can be expected. However, no specific herbicide to be used in combination with the tetrahydrophthalimides is disclosed.

EP-A-198 298 discloses synergistic herbicidal compositions comprising as active ingredients a tetrahydrophthalimide of the general formula I of the present invention and atrazine or cyanazine, respectively the second component is totally different from compounds II of the present invention.

Tetrahydrophthalimides of the general formula

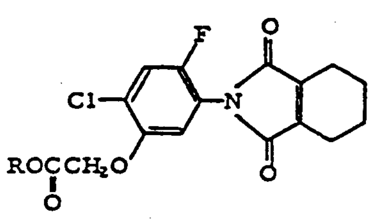

(I)

wherein R is lower alkyl, cycloalkyl or halo lower alkyl, are known to show synergistic herbicidal activity with atrazine or cyanazine, respectively from JP-A-84 095 204 or with a diazine derivative of the formula

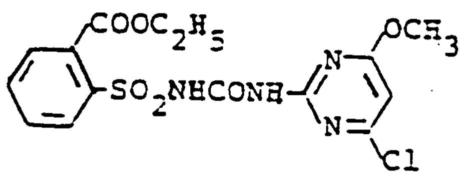

(II)

from EP-A-187 221, if R is n-$C_5H_{11}$.

The tetrahydro-phthalimides and in particular the "second herbicidal components" differ from the two herbicidal components used in the present invention.

Compounds (II), i.e. chlorsulfuron and metsulfuron-methyl, are also known as herbicides (Farm Chemicals Handbook '86, p. C58 and C157 (1986) published by Meister publishing Co.). However, their associated use has never been attempted, and the production of said synergistic effect on such associated use has never been expected.

The proportion of Compound(s) (I) as the component (a) and Compound(s) (II) as the component (b) in the composition of the invention may vary in a considerably broad range and is usually within a range of about 1 : 0.01 - 100 by weight, preferably about 1 : 0.02 - 20 by weight

In addition to the above active ingredients, the composition may contain a solid or liquid carrier or diluent. Any surface active or auxiliary agent may also be contained therein. Thus, the composition may be formulated in any conventional preparation form such as emulsifiable concentrate, wettable powder, suspension or granules. The total content of the active ingredients, i.e. Compound(s) (I) and Compound(s) (II), may be from about 0.5 to 90 % by weight, preferably from about 2 to 80 % by weight.

As the solid carrier or diluent, there may be used kaolin clay, attapulgite clay, bentonite, terra alba, pyrophyllite, talc, diatomaceous earth, calcite, wallnut-shell powder, urea, ammonium sulfate, synthetic hydrated silica, etc. Examples of the liquid carrier or diluent are aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton-seed oil), dimethylsulfoxide, acetonitrile, water, etc.

The surface active agent used for emulsification, dispersion or spreading may be of any type such as anionic type or nonionic type. Examples of the surface active agent include alkylsulfates, alkylarylsulfonates, dialkylsulfosuccinates, phosphates of polyoxyethylenealkylaryl ethers, polyoxyethylene alkyl ethers, polyoxyethylene alkylaryl ethers, polyoxyethylene polyoxypropylene block copolymers, sorbitan fatty acid esters, polyoxyethylene sorbitan fatty acid esters, etc. Examples of the auxiliary agents include ligninsulfonates, sodium alginate, polyvinyl alcohol, gum arabic, CMC (carboxymethyl cellulose), PAP (isopropyl acid phosphate), etc.

Practical embodiments of the composition are illustratively shown in the following Formulation Examples wherein part(s) are by weight.

Formulation Example 1

Forty parts of Compound (1), 10 parts of chlorsulfuron, 10 parts of synthetic hydrated silica, 3 parts of alkylsulfate, 2 parts of calcium ligninsulfonate and 35 parts of diatomaceous earth are well mixed and pulverized to obtain a wettable powder.

Formulation Example 2

Ten parts of Compound (1), 10 parts of chlorsulfuron, 3 parts of polyoxyethylene sorbitan monooleate and 77 parts of water are mixed and pulverized until the particle size becomes less than 5 microns to make a suspension.

Formulation Example 3

Sixty parts of Compound (2), 20 parts of chlorsulfuron, 3 parts of calcium ligninsulfonate, 2 parts of sodium laurylsulfate and 15 parts of synthetic hydrated silica are well mixed and pulverized to obtain a wettable powder.

Formulation Example 4

Thirty parts of Compound (1), 15 parts of metsulfuron-methyl, 5 parts of polyoxyethylene sorbitan monooleate, 5 parts of polyvinyl alcohol and 45 parts of water are mixed and pulverized until the particle size becomes less than 5 microns to make a suspension.

Formulation Example 5

Eight parts of Compound (2), 2 parts of metsulfuron-methyl, 30 parts of bentonite, 1 part of calcium ligninsulfonate and 59 parts of talc are well mixed and pulverized. The resulting powder is admixed with water and dried to obtain granules.

Formulation Example 6

Ten parts of Compound (1), 10 parts of metsulfuronmethyl, 3 parts of polyoxyethylene sorbitan monooleate, 77 parts of water are mixed and pulverized until the particle size becomes less than 5 microns to make a suspension.

Formulation Example 7

Ten parts of Compound (2), 10 parts of metsulfuron-methyl, 3 parts of polyoxyethylene sorbitan monooleate, 77 parts of water are mixed and pulverized until the particle size becomes less than 5 microns to make a suspension.

A composition comprising Compound(s) (I) and Compound(s) (II) thus formulated is useful for pre-emergence control of undesired weeds by soil treatment or post-emergence control of undesired weeds by foliar treatment. The soil treatments include the application to the soil surface prior to or after the seeding or transplanting of the crop or the incorporation into the soil before seeding. The foliar treatment may be effected by spraying the composition containing Compound(s) (I) and Compound(s) (II) over the top of plants. The directed application may also be adopted.

In order to improve the herbicidal activity, the composition may be used with other herbicides. Besides, it may be used in combination with insecticides, acaricides, nematocides, fungicides, plant growth regulators, fertilizers, soil improvers, etc.

The composition of the invention is widely used as the herbicide applicable in plowed field, non-cropping land, orchards, pasture land, lawn, forest, non-agricultural fields, etc.

The dosage of the active ingredients may vary depending on prevailing weather conditions, soil involved, formulation used, mixing proportion of each active ingredient, crop and weed species, etc. In general, however, the total amount of Compound(s) (I) and Compound(s) (II) may be within a range of about 1 to 300 grams per hectare. In case of the composition being in the form of emulsifiable concentrate, wettable powder, suspension or the like, it is normally diluted with water and then applied at a volume of about 100 to 1,000 liters per hectare to the area where extermination of weeds is desired. The composition in the form of granules, etc. is normally used as such.

The herbicidal activity of the composition of the invention will be explained in further detail with reference to the following Test Examples wherein the growth control percentage (%) was determined by weighing the aerial parts of the test plants (fresh weight) and making calculation according to the following equation:

$$\text{Growth control percentage (\%)} = \left\{ 1 - \frac{\text{Fresh weight of test plant in treated plot}}{\text{Fresh weight of test plant in untreated plot}} \right\} \times 100$$

The phytotoxicity to crop plants was visually observed.

Test Example 1

Seeds of wheat, barley, catchweed bedstraw, common chickweed, field pansy, scentless chamomile, persian speedwell, wild mustard and ivyleaf speedwell were sowed in a vat (area, 33 × 22 $cm^2$; height, 11 cm) filled with upland field soil, followed by cultivation outdoors. A designated amount of the composition in the form of a suspension formulated according to Formulation Example 6 or 7 was diluted with water and sprayed to the foliage of the test plants at a spray volume of 500 liters per hectare by the aid of a small hand sprayer. After 35 days' cultivation outdoors, the phytotoxicity and the growth control percentage were observed. The results are shown in Table 1. At the time of treatment, the test plants were in general at the

1 to 4-leaf stage and had a height of 2 to 25 cm, although the growing stage varied depending on each species.

Table 1

| Compound No. | Dosage (g/ha) | Mixing ratio (by weight) | Phytotoxicity | | Growth control percentage (%) | | | | | | |
|---|---|---|---|---|---|---|---|---|---|---|---|
| | | | Wheat | Barley | Catchweed bedstraw | Common chickweed | Field pansy | Scentless chamomile | Persian speedwell | Wild mustard | Ivyleaf speedwell |
| Metsulfuron-methyl | 4 | - | None | None | 10 | 95 | 61 | 92 | 92 | 98 | 21 |
| | 8 | - | None | None | 23 | 100 | 85 | 98 | 100 | 100 | 43 |
| (1) | 8 | - | None | None | 84 | 78 | 87 | 69 | 89 | 78 | 85 |
| | 16 | - | None | None | 93 | 87 | 94 | 80 | 94 | 92 | 92 |
| (1) + Metsulfuron-methyl | 8 + 4 | 1 : 0.5 | None | None | 98 | 100 | 100 | 100 | 100 | 100 | 97 |
| | 8 + 8 | 1 : 1 | None | None | 100 | 100 | 100 | 100 | 100 | 100 | 98 |
| | 16 + 4 | 1 : 0.25 | None | None | 100 | 100 | 100 | 100 | 100 | 100 | 100 |
| | 16 + 8 | 1 : 0.5 | None | None | 100 | 100 | 100 | 100 | 100 | 100 | 100 |
| (2) | 8 | - | None | None | 70 | 82 | 80 | 36 | 82 | 61 | 78 |
| | 16 | - | None | None | 84 | 92 | 89 | 50 | 90 | 83 | 91 |
| (2) + Metsulfuron-methyl | 8 + 4 | 1 : 0.5 | None | None | 89 | 100 | 99 | 100 | 100 | 100 | 94 |
| | 8 + 8 | 1 : 1 | None | None | 95 | 100 | 100 | 100 | 100 | 100 | 99 |
| | 16 + 4 | 1 : 0.25 | None | None | 99 | 100 | 100 | 100 | 100 | 100 | 100 |
| | 16 + 8 | 1 : 0.5 | None | None | 100 | 100 | 100 | 100 | 100 | 100 | 100 |

Test Example 2

Seeds of wheat, barley, catchweed bedstraw, common chickweed, field pansy, ladysthumb, persian speedwell, wild mustard and pineappleweed were sowed in a vat (area, 33 × 23 $cm^2$; height, 11 cm) filled with upland field soil, a designated amount of the composition in the form of a wettable powder formulated according to Formulation Example 1 was diluted with water and sprayed to the soil at a spray volume of

500 liters per hectare by the aid of a small hand sprayer. After 35 days' cultivation outdoors, the phytotoxicity and growth control percentage were observed. The results are shown in Table 2.

Table 2

| Compound No. | Dosage (g/ha) | Mixing ratio (by weight) | Phytotoxicity | | Growth control percentage (%) | | | | | | |
|---|---|---|---|---|---|---|---|---|---|---|---|
| | | | Wheat | Barley | Catch-weed bedstraw | Common chick-weed | Field pansy | Ladys-thumb | Persian speed-well | Wild mustard | Pineapple-weed |
| (1) | 40 | - | None | None | 87 | 90 | 92 | 83 | 94 | 82 | 88 |
| | 80 | - | None | None | 95 | 96 | 98 | 96 | 100 | 97 | 98 |
| Chlorsulfuron | 8 | - | None | None | 73 | 95 | 51 | 96 | 76 | 90 | 52 |
| | 16 | - | None | None | 89 | 100 | 72 | 100 | 91 | 98 | 83 |
| (1) + Chlorsulfuron | 40 + 8 | 1 : 0.2 | None | None | 98 | 100 | 100 | 100 | 100 | 100 | 100 |
| | 40 + 16 | 1 : 0.4 | None | None | 100 | 100 | 100 | 100 | 100 | 100 | 100 |
| | 80 + 8 | 1 : 0.1 | None | None | 100 | 100 | 100 | 100 | 100 | 100 | 100 |
| | 80 + 16 | 1 : 0.2 | None | None | 100 | 100 | 100 | 100 | 100 | 100 | 100 |

Test Example 3

Seeds of catchweed bedstraw were sowed in a vat (area, 33 × 23 $cm^2$; height, 11 cm) filled with upland field soil, and a designated amount of the composition in the form of a wettable powder formulated according to Formulation Example 1 was diluted with water and sprayed to the soil at a spray volume of 500 liters per hectare by the aid of a small hand sprayer. After 35 days' cultivation outdoors, the growth control percentage was observed. The results are shown in Table 3.

Table 3

| Compound No. | Dosage (g/ha) | Mixing ratio (by weight) | Growth control percentage of catchweed bedstraw (%) |
|---|---|---|---|
| (1) | 5 | - | 26 |
| | 10 | - | 50 |
| | 20 | - | 73 |
| | 40 | - | 92 |
| | 80 | - | 99 |
| Chlorsulfuron | 2 | - | 24 |
| | 4 | - | 44 |
| | 8 | - | 73 |
| | 16 | - | 90 |
| | 32 | - | 96 |
| (1) + Chlorsulfuron | 5 + 2 | 1 : 0.4 | 60 |
| | 5 + 4 | 1 : 0.8 | 67 |
| | 5 + 8 | 1 : 1.6 | 87 |
| | 5 + 16 | 1 : 3.2 | 98 |
| | 5 + 32 | 1 : 6.4 | 99 |
| | 10 + 2 | 1 : 0.2 | 72 |
| | 10 + 4 | 1 : 0.4 | 89 |
| | 10 + 8 | 1 : 0.8 | 95 |
| | 10 + 16 | 1 : 1.6 | 100 |
| | 10 + 32 | 1 : 3.2 | 100 |
| | 20 + 2 | 1 : 0.1 | 86 |
| | 20 + 4 | 1 : 0.2 | 95 |
| | 20 + 8 | 1 : 0.4 | 100 |
| | 20 + 16 | 1 : 0.8 | 100 |
| | 40 + 2 | 1 : 0.05 | 97 |
| | 40 + 4 | 1 : 0.1 | 100 |
| | 40 + 8 | 1 : 0.2 | 100 |
| | 40 + 16 | 1 : 0.4 | 100 |
| | 80 + 2 | 1 : 0.025 | 100 |
| | 80 + 4 | 1 : 0.05 | 100 |

Test Example 4

Seeds of ivyleaf speedwell and persian speedwell were sowed in each vat (area, 33 × 23 $cm^2$; height, 11 cm) filled with upland field soil and cultivated outdoors for 30 days. A designated amount of the composition in the form of a suspension formulated according to Formulation Example 6 or 7 was diluted with water and sprayed to the foliage of the test plant at a spray volume of 500 liters per hectare by the aid of a small hand sprayer. After 35 days' cultivation outdoors, the growth control percentage was observed. The results are shown in Tables 4 and 5. At the time of treatment, the test plant was at the 2-leaf stage and had a height of 2 cm.

Table 4

| Compound No. | Dosage (g/ha) | Mixing ratio (by weight) | Growth control percentage of Ivyleaf speedwell (%) |
|---|---|---|---|
| (1) | 2 | - | 37 |
| | 4 | - | 64 |
| | 8 | - | 85 |
| | 16 | - | 93 |
| | 32 | - | 98 |
| Metsulfuronmethyl | 1 | - | 19 |
| | 2 | - | 38 |
| | 4 | - | 66 |
| | 8 | - | 84 |
| | 16 | - | 95 |
| (1) + Metsulfuronmethyl | 2 + 1 | 1 : 0.5 | 56 |
| | 2 + 2 | 1 : 1 | 65 |
| | 2 + 4 | 1 : 2 | 82 |
| | 2 + 8 | 1 : 4 | 93 |
| | 2 + 16 | 1 : 8 | 98 |
| | 4 + 1 | 1 : 0.25 | 75 |
| | 4 + 2 | 1 : 0.5 | 87 |
| | 4 + 4 | 1 : 1 | 95 |
| | 4 + 8 | 1 : 2 | 99 |
| | 4 + 16 | 1 : 4 | 100 |
| | 8 + 1 | 1 : 0.125 | 94 |
| | 8 + 2 | 1 : 0.25 | 96 |
| | 8 + 4 | 1 : 0.5 | 100 |
| | 8 + 8 | 1 : 1 | 100 |
| | 16 + 1 | 1 : 0.0625 | 97 |
| | 16 + 2 | 1 : 0.125 | 100 |
| | 16 + 4 | 1 : 0.25 | 100 |
| | 16 + 8 | 1 : 0.5 | 100 |
| | 32 + 1 | 1 : 0.03125 | 100 |
| | 32 + 2 | 1 : 0.0625 | 100 |

Table 5

| Compound No. | Dosage (g/ha) | Mixing ratio (by weight) | Growth control percentage of Persian speedwell (%) |
|---|---|---|---|
| (2) | 2 | - | 41 |
| | 4 | - | 65 |
| | 8 | - | 78 |
| | 16 | - | 89 |
| | 32 | - | 94 |
| Metsulfuronmethyl | 1 | - | 21 |
| | 2 | - | 50 |
| | 4 | - | 77 |
| | 8 | - | 94 |
| | 16 | - | 99 |
| (2) + Metsulfuronmethyl | 2 + 1 | 1 : 0.5 | 58 |
| | 2 + 2 | 1 : 1 | 77 |
| | 2 + 4 | 1 : 2 | 91 |
| | 2 + 8 | 1 : 4 | 99 |
| | 2 + 16 | 1 : 8 | 100 |
| | 4 + 1 | 1 : 0.25 | 78 |
| | 4 + 2 | 1 : 0.5 | 92 |
| | 4 + 4 | 1 : 1 | 98 |
| | 4 + 8 | 1 : 2 | 100 |
| | 4 + 16 | 1 : 4 | 100 |
| | 8 + 1 | 1 : 0.125 | 88 |
| | 8 + 2 | 1 : 0.25 | 97 |
| | 8 + 4 | 1 : 0.5 | 100 |
| | 8 + 8 | 1 : 1 | 100 |
| | 16 + 1 | 1 : 0.0625 | 93 |
| | 16 + 2 | 1 : 0.125 | 99 |
| | 16 + 4 | 1 : 0.25 | 100 |
| | 16 + 8 | 1 : 0.5 | 100 |
| | 32 + 1 | 1 : 0.03125 | 96 |
| | 32 + 2 | 1 : 0.0625 | 100 |

The results in Test Examples 3 and 4 were analyzed according to the isobole (i.e. equivalent efficacy line) method [Vol. 3, Herbicides, pages 109 - 111 (1981) in "Noyaku Jikkenho" (Methods in Pesticide Science) edited by Junichi Fukami et al., Soft Science Inc., Tokyo) based on the Tammes's method [Tammes, P.M.L.: Neth. J. Plant Path., 70, 73 - 80 (1964)]. Namely, several combinations of the compositions having different mixing ratios of Compound (I) and chlorsulfuron or metsulfuron-methyl but exerting the same level of growth control effect, for example, 90 % growth control, were plotted in a graph so as to readily determine a synergistic effect, an arithmetic effect or a competitive effect. In case of exhibiting the synergistic effect, the equivalent efficacy line as plotted is shown below the arithmetic efficacy line.

Explaining further in detail with reference to the accompanying drawings, Fig. 1 wherein the ordinate indicates the dosage of chlorsulfuron and the abscissa indicates the dosage of Compound (1), the equivalent efficacy line (i.e. solid line) of 90 % growth control of catchweed bedstraw is located under the arithmetic efficacy line (i.e. dotted line), from which it is understood that the associated use of Compound (1) and chlorsulfuron in a certain mixing ratio produces the synergistic effect; Fig. 2 wherein the ordinate indicates the dosage of metsulfuron-methyl and the abscissa indicates the dosage of Compound (1), the equivalent efficacy line (i.e. solid line) of 90 % growth control of ivyleaf speedwell is located under the arithmetic efficacy line (i.e. dotted line), from which it is understood that the associated use of Compound (1) and metsulfuron-methyl in a certain mixing ratio produces the synergistic effect; likewise Fig. 3 wherein the ordinate indicates the dosage of metsulfuron-methyl and the abscissa indicates the dosage of

Compound (2), the equivalent efficacy line (i.e. solid line) of 90 % growth control of persian speedwell is located under the arithmetic efficacy line (i.e. dotted line), from which it is understood that the associated use of Compound (2) and metsulfuron-methyl in a certain mixing ratio produces the synergistic effect.

## Claims

1. A herbicidal composition which comprises a herbicidally effective amount of the combination of (a) at least one of compounds of the general formula:

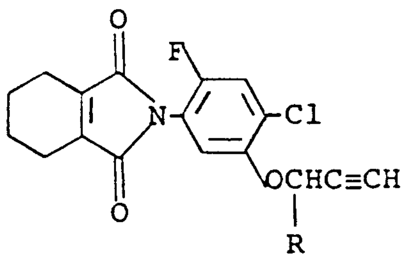

wherein R is a hydrogen atom or a methyl group and (b) at least one of 1-(2-chlorophenylsulfonyl)-3-(4-methoxy-6-methyl-1,3,5-triazin-2-yl)urea and methyl 2-[3-(4-methoxy-6-methyl-1,3,5-triazin-2-yl)-aminocarbonylaminosulfonyl]benzoate as the active ingredient, and an inert carrier or diluent.

2. The composition according to claim 1, wherein the weight proportion of the components (a) and (b) is from 1 : 0.01 to 100.

3. The composition according to claim 1, wherein the weight proportion of the components (a) and (b) is from 1 : 0.02 to 20.

4. A method for controlling weeds which comprises applying a herbicidally effective amount of the composition according to claim 1 to the weeds.

5. The method according to claim 4, wherein the weeds are those germinated in the field of wheat or barley.

6. The method according to claim 4, wherein the total amount of the components (a) and (b) is from 1 to 300 grams per hectare.

## Revendications

1. Une composition herbicide qui comprend une quantité herbicide efficace de la combinaison de (a) au moins un des composés de formule générale :

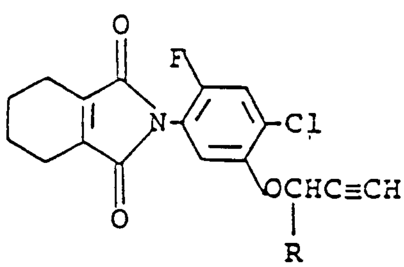

dans laquelle R est un atome d'hydrogène ou un groupe méthyle et de (b) au moins l'un des suivants : 1-(2-chlorophénylsulfonyl)-3-(4-méthoxy-6-méthyl-1,3,5-triazine-2-yl)urée et 2-[3-(4-méthoxy-6-méthyl-1,3,5-triazine-2-yl)aminocarbonylaminosulfonyl]benzoate de méthyle comme ingrédients actifs, et un support ou diluant inerte.

2. La composition selon la revendication 1, selon laquelle la proportion en poids des composants (a) et (b) est de 1 : 0,01 à 100.

3. La composition selon la revendication 1, selon laquelle la proportion en poids des composants (a) et (b) est de 1 : 0,02 à 20.

4. Une méthode pour contrôler les mauvaises herbes qui consiste à appliquer une quantité herbicide efficace de la composition selon la revendication 1, à ces mauvaises herbes.

5. La méthode selon la revendication 4, selon laquelle les mauvaises herbes sont celles qui ont germé dans un champs de blé ou d'orge.

6. La méthode selon la revendication 4, selon laquelle la quantité totale de composants (a) et (b) est de 1 à 300 g par hectare.

## Patentansprüche

1. Herbizides Mittel, das eine herbizid wirksame Menge der Kombination von (a) mindestens einer Verbindung der allgemeinen Formel:

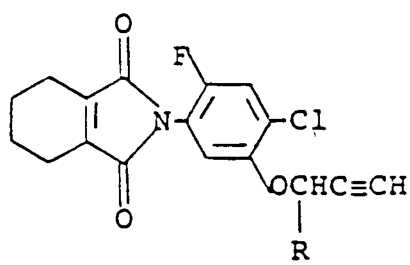

in der R ein Wasserstoffatom oder eine Methylgruppe ist, und (b) mindestens einer der Verbindungen 1-(2-Chlorphenylsulfonyl)-3-(4-methoxy-6-methyl-1,3,5-triazin-2-yl)harnstoff und Methyl-2-[3-(4-methoxy-6-methyl-1,3,5-triazin-2-yl)aminocarbonylaminosulfonyl]-benzoat als aktiven Bestandteil, und einen inerten Träger oder ein inertes Verdünnungsmittel umfaßt.

2. Zusammensetzung nach Anspruch 1, wobei das Gewichtsverhältnis der Komponenten (a) und (b) von 1 : 0,01 bis 100 beträgt.

3. Zusammensetzung nach Anspruch 1, wobei das Gewichtsverhältnis der Komponenten (a) und (b) von 1 : 0,02 bis 20 beträgt.

4. Verfahren zur Unkrautbekämpfung, das das Aufbringen einer herbizid wirksamen Menge des Mittels nach Anspruch 1 auf das Unkraut umfaßt.

5. Verfahren nach Anspruch 4, wobei das Unkraut auf einem Weizen- oder Gerstenfeld wächst.

6. Verfahren nach Anspruch 4, wobei die Gesamtmenge der Komponenten (a) und (b) im Bereich von 1 bis 300 g/ha liegt.

*Fig. 1*

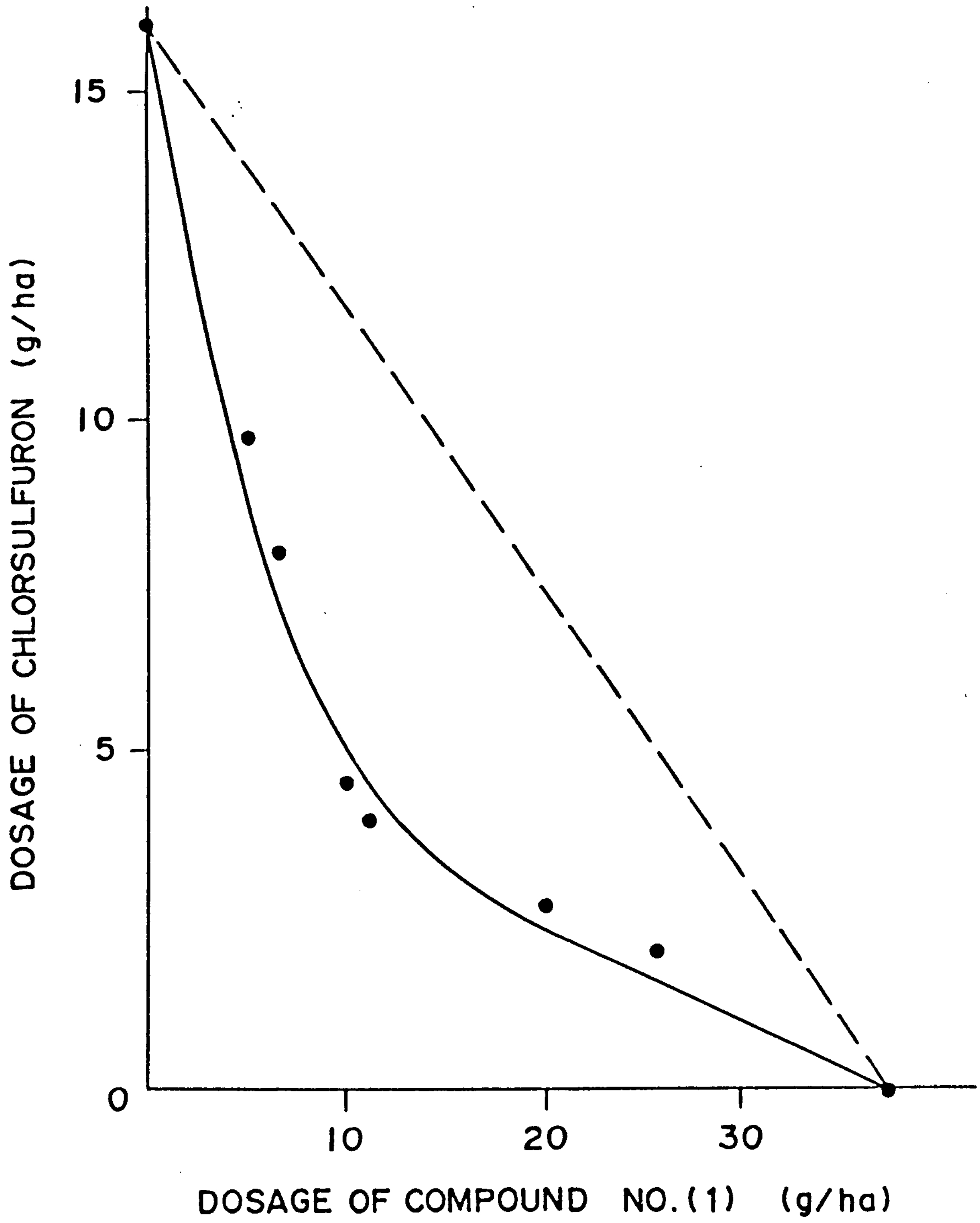
DOSAGE OF CHLORSULFURON (g/ha)
15
10
5
0
10
20
30
DOSAGE OF COMPOUND NO.(1) (g/ha)

*Fig. 2*

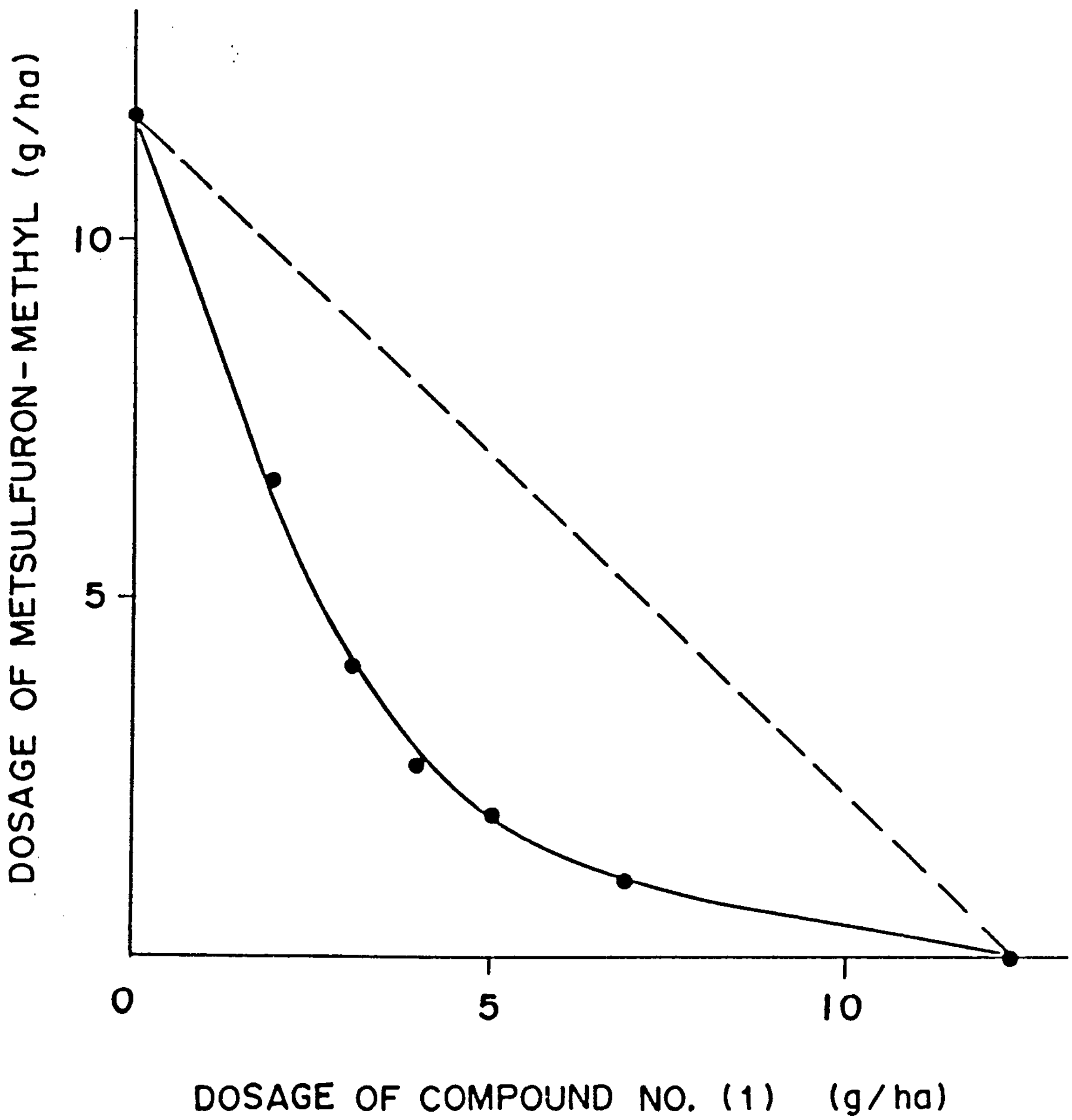
DOSAGE OF METSULFURON-METHYL (g/ha)
10
5
0
5
10
DOSAGE OF COMPOUND NO. (1) (g/ha)

Fig. 3

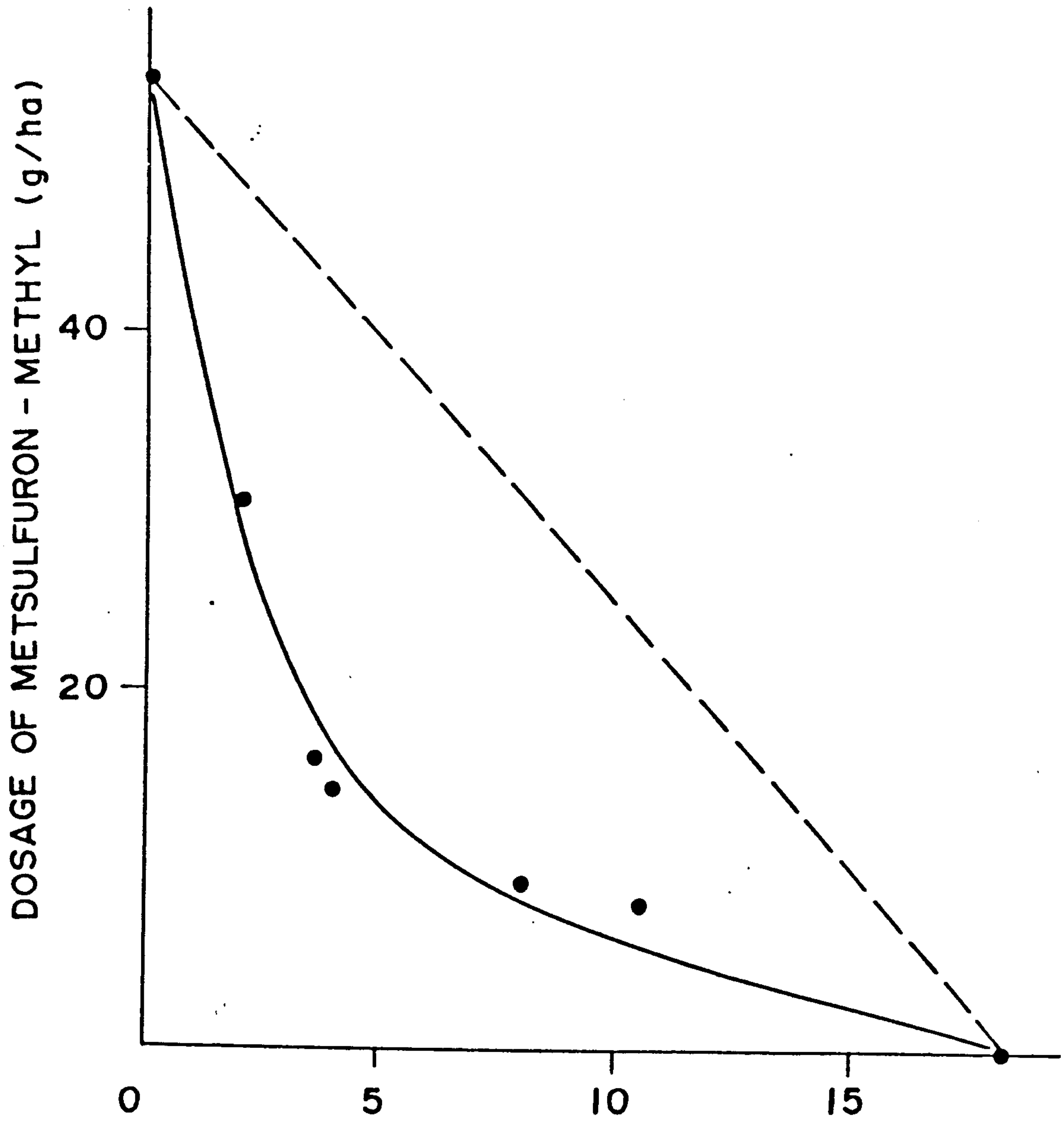
DOSAGE OF METSULFURON - METHYL (g/ha)
40
20
0
5
10
15
DOSAGE OF COMPOUND NO. (2) (g/ha)